# EUROPÄISCHE PATENTSCHRIFT

(11) **EP 0 996 655 B1**
(45) Veröffentlichungstag und Bekanntmachung des Hinweises auf die Patenterteilung: **06.08.2003**
(21) Anmeldenummer: 98930772.3
(22) Anmeldetag: 30.05.1998
(51) Int. Cl.: C08G 18/65, C09D 5/04

(54) **THIXOTROPE ZWEI-KOMPONENTEN-POLYURETHANSYSTEME**
THIXOTROPIC TWO-COMPONENT POLYURETHANE SYSTEMS
SYSTEMES DE POLYURETHANNE A DEUX CONSTITUANTS THIXOTROPES

(30) Priorität: 12.07.1997 DE 19729982
(43) Veröffentlichungstag der Anmeldung: 03.05.2000
(73) Patentinhaber: Sika GmbH, 70439 Stuttgart (DE)
(72) Erfinder: DÜRNAY, Wolfgang, D-72574 Bad Urach (DE); HILLER, Michael, D-74369 Löchgau (DE); GEIGER, Gunnar, D-73614 Schorndorf (DE); SPANG, Raimund, D-72574 Bad Urach (DE)
(74) Vertreter: Wolf, Eckhard, Dr.-Ing.
(86) Internationale Anmeldenummer: EP9803248
(87) Internationale Veröffentlichungsnummer: WO99002578

(56) Entgegenhaltungen:
- EP-A- 0 288 067
- EP-A- 0 420 420
- US-A- 4 736 009
- US-A- 5 128 433

## Beschreibung

Die Erfindung betrifft thixotrope Zwei-Komponenten-Polyurethansysteme, ein Verfahren zu ihrer Herstellung und deren Verwendung.

Bei vielen Verwendungen von Zwei-Komponenten-Polyurethansystemen (2K PUR), insbesondere für die Herstellung von Formkörpern für Cubing-Modelle, Urmodelle und dergl. in der Automobilindustrie, ist es erwünscht, daß besagte Zweikomponentensysteme unmittelbar nach der maschinellen Mischung der Komponenten und dem Auftrag thixotropieren, um dadurch nach dem Auftrag auf senkrechte Flächen auch bei hohen Schichtdicken nicht zum Abrutschen zu neigen.

Bisher wurden zu diesem Zweck pastöse gefüllte Polyurethansysteme verwendet, die, meistens in der Polyolkomponente, anorganische und/oder organische Verdickungsmittel enthalten. Als thixotrope Beschichtungszusammensetzung ist auch eine Zusammensetzung aus einem Bindemittel und einem Reaktionsprodukt eines Diisocyanats mit einem primären oder sekundären Polyamin, insbesondere Benzylamin als Läuferkontrollmittel bekannt (DE-PS 27 51 761). Als thixotropiegebende Mittel sind auch Polyamidharze mit freien Aminogruppen, die zur Gelbildung in die Lackharze mit eingebaut werden, beschrieben (EP-A 0 006 252, S. 1).

Ebenfalls bekannt ist, daß aus der Umsetzung von primären und/oder sekundären Polyaminen, monofunktionellen Alkoholen und/oder Aminen mit Diisocyanatverbindungen resultierende Harnstoff-Addukte, die in situ mit dem Bindemittel oder einem Teil des Bindemittels erzeugt werden, thixotropiegebend sind (DE-PS 23 60 019).

In der DE-A 40 23 005 sind thixotrope Polyurethansysteme auf der Basis einer Polyol- und einer Isocyanatkomponente beschrieben, deren Polyolkomponente eine Mischung von Polyamidamin und niedermolekularen mehrfunktionellen, insbesondere aromatischen Aminen enthält. Die Mischung aus Polyol-, Isocyanat- und Aminkomponenten weist für kurze Zeit die zum Auftrag nötige niedrige Viskosität auf, und die für die über Kopf- oder in der Senkrechten Verarbeitbarkeit der Mischung erforderliche Thixotropie stellt sich danach ein. In den Ausführungsbeispielen werden Polyurethansysteme in Schichtdicken von 5 mm aufgetragen, die als Klebstoffsysteme z. B. für Verglasungen verwendet werden. Die in der DE-A beschriebenen Polyurethansysteme verwenden zwar eine Kombination von zwei Aminen, diese reagieren aber etwa gleichzeitig mit Isocyanat, um zu dem gewünschten Ergebnis hinsichtlich niedriger Viskosität und Thixotropie zu führen. Zum Auftrag von Schichten mit hoher Schichtdicke (etwa 20 bis 50 mm) sind diese Systeme nicht geeignet, weil sie das Abrutschen dieser Schichten, das durch die während der exothermen Aushärtungsreaktion auftretende starke Reaktionswärme bedingt ist, nicht vollständig unterbinden können.

Ausgehend hiervon liegt der Erfindung die Aufgabe zugrunde, verbesserte Zwei-Komponenten-Polyurethansysteme zur Verfügung zu stellen, deren Komponenten nach der maschinellen Mischung innerhalb kürzester Zeit durch chemische Reaktion eine ausreichende Thixotropie aufbauen, die bewirkt, daß einerseits in den aufgetragenen Strängen genügend Geschmeidigkeit verbleibt, damit diese ausreichend ineinanderlaufen und andererseits ermöglicht, daß Stränge in hohen Schichtdicken auf senkrechte Flächen aufgetragen werden können, ohne daß ein Abrutschen derselben nach dem Einsetzen der exothermen Aushärtungsreaktion erfolgt.

Die Aufgabe der Erfindung wird erfindungsgemäß gelöst durch die Merkmale des Anspruchs 1.

Vorteilhafte Ausgestaltungen der Erfindung ergeben sich aus den Unteransprüchen.

Die Erfindung umfaßt auch ein Verfahren zur Herstellung des Polyurethansystems (Anspruch 12) und dessen Verwendung (Anspruch 13).

Vorteilhafte Merkmale des erfindungsgemäßen 2K PUR Systems sind:
1. Flüssige Konsistenz der beiden Ausgangskomponenten, wodurch eine leichte Vemischbarkeit der Komponenten ermöglicht wird;
2. Guter Verlauf der einzelnen aufgetragenen Stränge ineinander, wodurch wenig Lufteinschlüsse und glatte Oberflächen erhalten werden;
3. Gute Standfestigkeit der Beschichtungsmasse und dadurch geringe Abrutschneigung an senkrechten Flächen;
4. Lange Nachbearbeitungszeit zum Glattstreichen und dergl.
5. Möglichkeit des Auftrags mehrerer Schichten übereinander bei guter Zwischenschichthaftung;
6. Je nach Austragsmenge und Austragsstrecke variierfähige Konsistenz zum Zeitpunkt des Auftrags.

Das Polyurethansystem gemäß der vorliegenden Erfindung basiert auf einem Zwei-Komponenten-System (2K-PUR System) aus flüssigen Komponenten. Die Harzkomponente besteht aus modifizierten Polyetherpolyolen und/oder Polyesterpolyolen mit Füllstoffanteilen, die Härterkomponente ist ein niedrigviskoses auf 4,4'-Diphenylmethan-diisocyanat (MDI) basierendes Isocyanat und ungefüllt.

Gemäß der Erfindung am wesentlichsten ist, daß die Thixotropie des Systems zeitlich so eingestellt wird, daß das System nach dem Vermischen in einer ersten Stufe durch die Reaktion von Amin A1 mit dem Isocyanat bereits so thixotrop wird, daß es den Untergrund noch gut benetzt und auch zwischen den aufgetragenen Strängen in den Vertiefungen gut verläuft, gleichzeitig aber bereits so standfest ist, daß es an senkrechten Flächen auch in Schichtdicken von etwa 20 mm und darüber gut haftet und nicht abrutscht. Da die in der ersten Stufe erzeugte Strukturviskosität aber in der Regel nicht ausreicht, um ein nach Einsetzen der Vernetzungsreaktion Polyol-Isocyanat infolge der freiwerdenden Reaktionswärme und der daraus resultierenden Schwächung der zwischenmolekularen Haftungskräfte auftretendes Abrutschen der aufgetragenen Schicht zu verhindern, ist eine weitere, zeitlich verzögert einsetzende Reaktion erforderlich. In einer zweiten Stufe wird daher in dem System durch die Reaktion von Amin A2 mit dem Isocyanat eine stärkere Strukturviskosität bzw. Thixotropie aufgebaut, die temperaturstabil bleibt, aber das nach der Reaktion in der ersten Stufe stattfindende Verlaufen nicht mehr zuläßt.

Das erfindungsgemäße modifizierte Polyol/Isocyanat-System hat hinsichtlich der Verarbeitung also zwei Aufgaben zu erfüllen, wobei Aufgabe 1 gute Benetzung und guten Verlauf bzw. Glättung unmittelbar nach dem Auftrag auf den Untergrund, bei guter Standfestigkeit bei Temperaturen bis etwa 40 °C beinhaltet und Aufgabe 2 gute zwischenmolekulare Haftung nach Einsetzen der exothermischen Aushärtungsreaktion Polyol/Isocyanat mit einhergehender Temperaturerhöhung bis auf etwa 80 °C beinhaltet, wodurch ein Abrutschen von auch in hohen Schichtdicken aufgetragenen Schichten von senkrechten Flächen verhindert wird.

Beide Aufgaben können durch den Einsatz von nur einem Amin, bzw. von etwa gleichzeitig reagierenden Amingemischen nicht gelöst werden. Durch Erhöhung der Aminmenge bzw. eine entsprechende Auswahl der Amintypen kann zwar die Aufgabe 2 hinsichtlich der Verhinderung des Abrutschens der aufgetragenen Schichten gelöst werden, nicht aber gleichzeitig die Aufgabe 1 hinsichtlich der guten Benetzung und des Verlaufens auf der Unterlage. Es wurde aber gefunden, daß beide Aufgaben gelöst werden können, wenn mindenstens zwei oder mehr Amine eingesetzt werden, die in ihrer Reaktivität deutlich verschieden sind. Dabei muß die Reaktivität R1 von Amin 1 gegenüber der Isocyanatkomponente größer sein als die Reaktivität R2 von Amin 2 gegenüber der Isocyanatkomponente. Erfindungsgemäß wurde gefunden, daß das Verhältnis der Reaktivität von Amin 1 gegenüber Isocyanat zu der Reaktivität von Amin 2 gegenüber Isocyanat, R1 : R2, etwa 1000 bis 5 und vorzugsweise etwa 100 bis 5 sein muß.

Zum Zeitpunkt 0 werden die Materialkomponenten maschinell miteinander vermischt. In der ersten Stufe setzt sich das Amin 1 innerhalb weniger Sekunden mit dem Isocyanat um. Dabei kommt der Verlaufsvorgang weitgehend zum Abschluß. In der zweiten Stufe setzt sich, im Anschluß an die Reaktion in der ersten Stufe, das Amin 2 mit dem Isocyanat innerhalb von etwa 1 bis 2 Minuten um und bildet ein durch Wasserstoffbrücken und andere zwischenmolekulare Kräfte zusammengehaltenes Gelgerüst, so daß kein Abrutschen der aufgetragenen Schicht während der Topfzeit, in der das Polyol mit Isocyanat reagiert, mehr stattfindet. Die Topfzeit beträgt etwa 30 bis 40 Minuten, wobei nach etwa 20 Minuten ohne die Reaktion von Amin 2 ein Abrutschen der an senkrechten Flächen aufgetragenen Schichten stattfinden würde.

Zu besonders geeigneten, der Polyolkomponente zuzusetzenden Aminen 1 für die erste Reaktionsstufe gehören folgende Amine, deren Reaktivität R1 > R2 ist:
1 a) aromatische Amine wie
   2,4- oder 2,6-Toluylendiamin (TDA),
   3,5-Diethyl-toluylendiamin (DETDA),
   Methylen-bis-(2,6-diisopropylanilin) (M-DIPA),
   Methylen-bis-(2-methyl-6-isopropylanilin) (M-MIPA),
   Methylen-bis-(2,6-diethylanilin) (M-DEA),
   4,4'Methylen-bis-(6-methyl-anilin),
   2,6-Diisopropylanilin (DIPA),
   2-Methyl-6-isopropylanilin (MIPA),
   4,4'-Diamino-diphenyl-methan (MDA),
1 b) cycloaliphatische Amine wie
   3-Isocyanatomethyl-3,5,5-trimethylcyclohexylamin (Isophorondiamin, IPD),
   4,4'Diamino-3,3'dimethyl-cyclohexylmethan, Laromin C 260,
   Cyclohexandiamin,
   Piperazin, N-Aminoethylpiperazin,
1 c) araliphatische Amine wie
   m-Xylylendiamin (M-XDA) und Derivate
   oder andere Typen mit einer aromatisch und einer
   aliphatisch gebundenen Amingruppe,
1 d) aliphatische Amine und Polyamine wie
   Butylamin,
   Diethylentriamin,
   Triethylentetramin,
   Trimethyl-hexamethylendiamin,
   Pentaethylenhexamin,
   Polyetherpolyamine wie H₂N-(CH₂-CH₂-O)ₓ-CH₂-CH₂-NH₂ und Derivate.

Zu besonders geeigneten, der Polyolkomponente zuzusetzenden Aminen 2 für die zweite Reaktionsstufe gehören beispielsweise folgende Amine, deren Reaktivität R2 < R1 ist :
2 Methylen-bis-(3-chlor-2,6-diethylanilin) (M-CDEA), 3,5-Dimethylthio-2,4- oder -2,6-toluylendiamin, das unter dem Warenzeichen Ethacure 300 von der Ethyl Corp. erhältlich ist,
   3,5-Diamino-4-chlor-benzoesäure-isobutylester (DACB), Methylen-bis-anthranilsäuremethylester (MBMA), 4,4'-Diamino-3,3'-dichlordiphenylmethan (MOCA), oder ähnliche Verbindungen.

Bei den Aminen vom Typ A2 handelt es sich um durch elektronenziehende oder mesomere Effekte infolge Basizitätserniedrigung und/oder sterischer Hinderung stark reaktionsverzögerte Amine. Ausschlaggebend ist, daß das Amin 2 eine deutlich geringere Reaktivität als das Amin 1 gegenüber Isocyanat aufweist. Es ist auch möglich, ein Amin 1 aus den Gruppen 1 b) bis 1 d) mit einem Amin 2 aus der Gruppe 1 a) zu kombinieren, wenn in dieser Kombination ausreichende Reaktivitätsunterschiede vorhanden sind. Es können auch Mischungen von Aminen aus den einzelnen Gruppen eingesetzt werden.

Ein Vergleich der relativen Reaktivitäten der Amine aus den Gruppen 1 a), 1 b) bis d) und 2 ist in der folgenden Tabelle 1 wiedergegeben:

**Tabelle 1**

| Amine der Gruppe | relative Reaktivität |
|---|---|
| 2 | 0,1 bis 1 |
| 1 a) | 5 bis 200 |
| 1 b), c), d) | 100 bis > 1000 |

In der Praxis bedeutet dies, daß unter den in Beispiel 1 und 2 aufgeführten Bedingungen die Amine aus den Gruppen 1 b) bis 1 d) momentan, die Amine aus der Gruppe 1 a) innerhalb von etwa 5 bis 10 Sek. und die Amine aus der Gruppe 2 innerhalb von etwa 30 bis 90 Sek. mit Isocyanat reagieren.

Die vorstehend genannten Aminoverbindungen können in Form flüssiger Zubereitungen mit geeigneten Polyolen vermischt werden. Als solche kommen die an sich aus der Polyurethanchemie bekannten Polyole, die mindestens 2 alkoholisch gebundene Hydroxylgruppen aufweisen, in Frage. Hierzu gehören die bekannten linearen oder verzweigten Polyetherpolyole des Molekulargewichtsbereichs 75 bis 6000, oder die bekannten linearen oder verzweigten Polyesterpolyole des Molekulargewichtsbereichs 75 bis 6000, die beispielsweise in DE-PS 21 60 589 bzw. DE-A 33 40 588 beschrieben sind. Die formulierten Polyolkomponenten weisen Viskositäten bei 25 °C von ca. 1.000 bis 60.000 mPa.s auf. In den Polyolkomponenten können auch andere Bestandteile, z. B. Trockenmittel, Pigmente, Dispersionshilfsmittel, Weichmacher, Entschäumer und ggf. Katalysatoren enthalten sein. Zu diesen gehören beispielsweise handelsübliches Kalium-Natrium-Alumosilikat vom Zeolithtyp (Trockenmittel), Kreide, Calciumcarbonat, Pigmente, Weichmacher auf Kohlenwasserstoffbasis und ggf. tertiäre Amine oder organische Zinnverbindungen als Katalysator.

Als Isocyanatkomponente kommen solche, die auch zur Verwendung in 2K PUR Systemen geeignet sind und beispielsweise in DE-PS 21 60 589 bzw. DE-A 33 40 588 beschrieben sind, in Frage. Besonders bevorzugt werden aromatische Diisocanate, beispielsweise Derivate von 4,4'-Diphenylmethandiisocyanat (MDI) und Toluylendiisocyanat (TDI). Die Isocyanatkomponente weist eine Viskosität bei 25 °C von ca. 10 bis 10.000 mPa.s auf.

Das stöchiometrische Verhältnis der Polyolkomponente samt allen Zusätzen zur Isocyanatkomponente kann 100 : 10 Gew.teile bis 100 : 200 Gew.teile betragen.

Der Anteil von Amin 1 an der Polyolkomponente beträgt etwa 0,25 bis 5 Gew.%, vorzugsweise 0,5 bis 2 Gew.%. Der Anteil von Amin 2 an der Polyolkomponente beträgt etwa 0,3 bis 5 Gew.%, vorzugsweise 1 bis 2 Gew.%. Die Zugabe einer Kombination Amin 1 zu Amin 2 im Verhältnis 0,5 : 1 bis 2 : 1 (Gew.%), beispielsweise von 1,5 : 1,5 Gew.%, ist hinsichtlich der gewünschten Ergebnisse am günstigsten.

Der Polyolkomponente werden die erfindungsgemäßen Amine vor der Umsetzung mit der Isocyanatkomponente zugegeben. Die Polyolkomponente samt aller Zusätze wird vor dem Auftrag auf die gewünschten Flächen mit der Isocyanatkomponente maschinell vermischt.

Die Erfindung wird anhand der Ausführungsbeispiele näher erläutert.

### Beispiel 1

4,4'-Methylen-bis-(3-chlor-2,6-diethylanilin) (M-CDEA), Smp. ca. 85 °C, das von Lonza AG, Basel erhältlich ist, wird als Amin 2 in der Wärme in der Polyetherpolyolkomponente gelöst. Als Polyol 1 wird ein Polypropylenglykol mit einer Hydroxylzahl von 380 mg KOH/g und einer Viskosität bei 25 °C von 650 mPa.s verwendet. Die restlichen Komponenten, d. h. Trockenmittel 1, welches ein handelsübliches K-Na-Alumosilikat vom Zeolithtyp A ist und unter dem Warenzeichen Baylith L Pulver von der Fa. Bayer AG, Leverkusen erhältlich ist; Diazabicyclooctan, das als 33 %ige Lösung in Dipropylenglycol beispielsweise unter dem Warenzeichen Dabco 33 LV von der Firma Biesterfeld & Co, Hamburg erhältlich ist, als Katalysator; Calciumcarbonat, das als Kreide unter dem Warenzeichen Omya BLR 2 von der Fa. Omya, Köln erhältlich ist und 4,4'-Diamino-3,3'-dimethylcyclohexylmethan (Laromin C 260) als Amin 1, das von der Fa. BASF, Ludwigshafen erhältlich ist, werden der Lösung zugegeben und mittels eines Zahnscheibendissolvers eindispergiert. Die gesamte Mischung wird zur Entgasung einer Vakuumbehandlung unterzogen.

| | |
|---|---|
| Polyol 1 | 100 g |
| Amin 2 | 6 g |
| Trockenmittel 1 | 15 g |
| Katalysator | 0,05 g |
| Calciumcarbonat, Kreide | 285 g |
| Amin 1 | 6 g |

| | |
|---|---|
| Viskosität der Mischung | etwa 25 Pa.s |
| Dichte der Mischung | etwa 1,8 kg/l |

Die so hergestellte Mischung wird mittels einer üblichen 2K-Misch- und Dosieranlage mit einem prepolymer-modifizierten 4,4'-Diphenylmethan-diisocyanat mit polymeren Anteilen, Dichte 1,23 kg/l, NCO-Gehalt 28 %, Viskosität bei 25 °C: 250 mPa.s als Isocyanat 1 im stöchiometrischen Verhältnis von 100 : 30 in Gew.Teilen vermischt. Es resultiert eine thixotrope Masse, die in einem Arbeitsgang über einen flexiblen Schlauch an senkrechten Flächen in einer Schichtdicke von 20 mm und darüber aufgetragen werden kann und die zu einem harten Werkstoff mit einer Shore Härte von ca. D 90 aushärtet.

### Beispiel 2

4,4'-Methylen-bis-(3-chlor-2,6-diethylanilin) (M-CDEA), Smp. ca. 85 °C, das von Lonza AG, Basel erhältlich ist, wird als Amin 2 in der Wärme in der Polyetherpolyolkomponente gelöst. Als Polyol 2 wird ein Polypropylenglykol mit einer Hydroxylzahl von 76 mg KOH/g und einer Viskosität bei 25 °C von 900 mPa.s verwendet. Die restlichen Komponenten, d. h. Trockenmittel 2, welches eine pastenförmige Zubereitung von Zeolith in Rizinusöl ist und unter dem Warenzeichen Baylith L Paste von der Fa. Bayer AG, Leverkusen erhältlich ist; Butandiol-1,4; Diazabicyclooctan, das als 33 %ige Lösung in Dipropylenglycol beispielsweise unter dem Warenzeichen Dabco 33 LV von der Firma Biesterfeld & Co, Hamburg erhältlich ist, als Katalysator und
4,4'-Diamino-3,3'-dimethyl-cyclohexylmethan (Laromin C 260) als Amin 1, das von der Fa. BASF, Ludwigshafen erhältlich ist, werden mit einem Rührwerk der Lösung zugemischt.

| | |
|---|---|
| Polyol 2 | 100 g |
| Amin 2 | 1,3 g |
| Trockenmittel 2 | 12 g |
| Butandiol-1,4 | 9 g |
| Katalysator | 0,05 g |
| Calciumcarbonat, Kreide | 285 g |
| Amin 1 | 1,8 g |

| | |
|---|---|
| Viskosität der Mischung | 1,3 Pa.s bei 25 °C |
| Dichte der Mischung | 1,05 kg/l |

Diese Mischung wird mittels einer üblichen 2K-Misch- und Dosieranlage mit einem prepolymer-modifizierten, aromatischen Diisocyanat, Dichte 1,21 kg/l, NCO-Gehalt 25 %, Viskosität bei 25 °C: 300 mPa.s als Isocyanat 2 im stöchiometrischen Verhältnis von 100 : 60 in Gew.Teilen vermischt. Es resultiert eine thixotrope Masse, die in einem Arbeitsgang über einen flexiblen Schlauch an senkrechten Flächen in einer Schichtdicke von 20 mm und darüber aufgetragen werden kann und die zu einem elastischen Material mit einer Shore Härte von ca. A 90 aushärtet.

## Patentansprüche

1. Zwei-Komponenten-Polyurethansysteme aus einer Polyol- und einer Isocyanatkomponente, **dadurch gekennzeichnet, dass** die Polyolkomponente mindestens zwei Amine A1 und A2 enthält, wobei der Anteil des mindestens einen Amins A1 an der Polyolkomponente 0,25 bis 2 Gew.-% beträgt und der Anteil des mindestens einen Amins A2 an der Polyolkomponente 0,3 bis 2 Gew.-% beträgt und wobei die Reaktivität R1 des mindestens einen Amins A1 gegenüber der Isocyanatkomponente um den Faktor 5 bis 1.000 größer ist als die Reaktivität R2 des mindestens einen Amins A2 gegenüber der Isocyanatkomponente und wobei die Reaktivität der Polyolkomponente gegenüber der Isocyanatkomponente geringer ist als die Reaktivitäten R1 und R2 der Amine A1 bzw. A2.

2. Zwei-Komponenten-Polyurethansystem nach Anspruch 1, **dadurch gekennzeichnet, dass** das Verhältnis der Reaktivität R1 des Amins A1 zur Reaktivität R2 des Amins A2 gegenüber der Isocyanatkomponente 1000 bis 5 ist.

3. Zwei-Komponenten-Polyurethansystem nach Anspruch 1, **dadurch gekennzeichnet, dass** das Verhältnis der Reaktivität R1 des Amins A1 zur Reaktivität R2 des Amins A2 gegenüber der lsocyanatkomponente 100 bis 5 ist.

4. Zwei-Komponenten-Polyurethansystem nach einem der vorhergehenden Ansprüche, **dadurch gekennzeichnet, dass** das Amin A1 ausgewählt ist aus den Gruppen der aromatischen Amine (Gruppe 1a), der cycloaliphatischen Amine (Gruppe 1b), der araliphatischen Amine (Gruppe 1c) und/oder der aliphatischen Amine und aliphatischen Polyamine (Gruppe 1d).

5. Zwei-Komponenten-Polyurethansystem nach einem der vorhergehenden Ansprüche, **dadurch gekennzeichnet, dass** das Amin A2 ausgewählt ist aus der Gruppe 2, welche umfasst:
Methylen-bis-(3-chlor-2,6-diethylanilin) (M-CDEA),
3,5-Dlmethylthio-2,4- oder -2,6-toluylendiamin,
3,5-Dlamlno-4-chlor-benzoesäure-isobutylester (DACB),
Methylen-bis-anthranilsäuremethylester (MBMA),
4,4'-Diamino-3,3'-dichlorphenylmethan (MOCA).

6. Zwei-Komponenten-Polyurethansystem nach Anspruch 4, **dadurch gekennzeichnet, dass** das Amin A1 ausgewählt ist aus den Gruppen 1b), 1c) und/oder 1d) und dass das Amin A2 ausgewählt ist aus der Gruppe 1a), wobei die Reaktivität R1 des Amins A1 aus den Gruppen 1b), 1c) und/oder 1d) größer ist als die Reaktivität R2 des Amins A2 aus der Gruppe 1a).

7. Zwei-Komponenten-Polyurethansystem nach einem der vorhergehenden Ansprüche, **dadurch gekennzeichnet, dass** das Amin A1 4,4'-Diamino-3,3'-dimethyl-cyclohexylmethan und das Amin A2 4,4'-Methylen-bis-(3-chlor-2,6-diethylanilin) ist.

8. Zwei-Komponenten-Polyurethansystem nach einem der vorhergehenden Ansprüche, **dadurch gekennzeichnet, dass** das Gewichtsverhältnis von Amin A1 zu Amin A2 0,5:1 bis 2:1 in Gew.-% ist.

9. Zwei-Komponenten-Polyurethansystem nach einem der vorhergehenden Ansprüche, **dadurch gekennzeichnet, dass** das Polyol als Polyetherpolyolen und/oder Polyesterpolyolen des Molekulargewichtsbereichs 75 bis 6.000 besteht und das Diisocyanat ein 4,4'-Diphenylmethan-diisocyanat-Derivat ist.

10. Verfahren zur Herstellung eines Zwei-Komponenten-Polyurethansystems nach einem der vorhergehenden Ansprüche, **dadurch gekennzeichnet, dass** eine Aminkomponente in der Polyolkomponente gelöst wird, die zweite Aminkomponente und die gewünschten Zusätze mittels eines Rührwerks zudosiert werden und die resultierende Mischung mit dem Diisocyanat in einer Misch- und Dosieranlage vermischt wird.

11. Verwendung eines Zwei-Komponenten-Polyurethansystems nach einem der Ansprüche 1 bis 9 zur Herstellung von Formkörpern für Cubing-Modelle, Urmodelle und dergleichen in der Automobilindustrie sowie zur Herstellung strukturierter Körper und Dickbeschichtungen und Dichtungsraupen.

## Claims

1. Two-component polyurethane system comprising a polyol component and an isocyanate component, thereby characterized, that the polyol component contains at least two amines A1 and A2, wherein the portion of the at least one amine A1 in the polyol component corresponds approximately to 0.25 to 2 wt.%, and the portion of the at least one amine A2 in the polyol component corresponds approximately 0.3 to 2 wt.%, wherein the reactivity R1 of the at least one amine A1 to the isocyanate component is greater by a factor 5 to 1.000 than the reactivity R2 of the at least one amine A2 to the isocyanate component and wherein the reactivity of the polyol component to the isocyanate component is less than the reactivities R1 and R2 of the amines A1 and A2 respectively.

2. Two-component polyurethane system according to Claim 1, thereby characterized, that the relationship of the reactivity R1 of amine A1 to reactivity R2 of amine A2 with respect to the isocyanate component is from 1000 to 5.

3. Two-component polyurethane system according to Claim 1, thereby characterized, that the relationship of the reactivity R1 of amine A1 to the reactivity R2 of amine A2 with respect to the isocyanate component is from 100 to 5.

4. Two-component polyurethane system according to one of the preceding Claims, thereby characterized, that amine A1 is selected from aromatic amines (Group 1 a), cycloaliphatic amines (Group 1 b), araliphatic amines (Group 1 c), and aliphatic amines and polyamines (Group 1 d).

5. Two-component polyurethane system according to one of the preceding Claims, thereby characterized, that amine A2 is selected from Group 2 which includes:
methylene-bis-(3-chlor-2,6-diethylanilin) (M-CDEA),
3,5-dimethylthio-(2,4 or 2,6)-toluylenediamine,
3,5-diamino-4-chlor-benzoesaure-isobutylester (DACB),
methylene-to-anthranilate methylester (MBMA),
4,4'-diamino-3,3'-dichlordiphenylmethane (MOCA)

6. Two-component polyurethane system according to Claim 4, thereby characterized, that amine A1 is selected from Groups 1 b), 1 c) and/or 1 d) and amine A2 is selected from Group 1 a), wherein the reactivity R1 of amine A1 from Groups 1 b), 1 c) and/or 1 d) is greater than the reactivity R2 of amine A2 from Group 1 a).

7. Two-component polyurethane system according to one of the preceding Claims, thereby characterized, that amine A1 is 4,4'-diamino-3,3'-dimethyl-cyclohexylmethane and amine A2 is 4,4'-methylene-bis-(3-chloro-2,6-diethylaniline).

8. Two-component polyurethane system according to one of the preceding Claims, thereby characterized, that the weight relationship of amine A1 to amine A2 is 0.5:1 to 2:1 in wt.%.

9. Two-component polyurethane system according to one of the preceding Claims, thereby characterized, that the polyol is at least one of a polyether polyol and a polyester polyol with a molecular weight in the range of 75 to 6000, and the diisocyanate is a 4,4'-diphenylmethane-diisocyanate-derivative.

10. Process for production of the two-component polyurethane system according to the preceding claims, thereby characterized, that the amine component is dissolved in the polyol component, the two amine components and the desired additives are added using a stirring device and the resulting mixture is mixed with the diisocyanate in a mixing-and-dosing device.

11. Use of the two-component polyurethane system according to one of Claims 1-9 for production of shaped bodies for cubing-models, prototypes and the like in the automobile industry, as well as for production of structured bodies and thick coatings and sealing beads.

## Revendications

1. Système de polyuréthane à deux composantes formé d'une composante polyol et d'une composante isocyanate, **caractérisé en ce que** la composante polyol contient au moins deux amines A1 et A2, la fraction de l'amine A1, au moins au nombre de une, dans la composante polyol étant comprise entre 0,25 et 2 % en masse, et la fraction de l'amine A2, au moins au nombre de une, dans la composante polyol étant comprise entre 0,3 et 2 % en masse, et où la réactivité R1 de l'amine A1, au moins au nombre de une, vis-à-vis de la composante isocyanate est supérieure d'un facteur compris entre 5 et 1 000 à la réactivité R2 de l'amine R2, au moins au nombre de une, vis-à-vis de la composante isocyanate, et où la réactivité de la composante polyol vis-à-vis de la composante isocyanate est plus faible que les réactivités R1 et R2 de l'amine A1 ou A2.

2. Système de polyuréthane à deux composantes selon la revendication 1, **caractérisé en ce que** le rapport entre la réactivité R1 de l'amine A1 et la réactivité R2 de l'amine A2 vis-à-vis de la composante isocyanate est compris entre 1 000 et 5.

3. Système de polyuréthane à deux composantes selon la revendication 1, **caractérisé en ce que** le rapport entre la réactivité R1 de l'amine A1 et la réactivité R2 de l'amine A2 vis-à-vis de la composante isocyanate est compris entre 100 et 5.

4. Système de polyuréthane à deux composantes selon l'une des revendications précédentes, **caractérisé en ce que** l'amine A1 est sélectionnée parmi le groupe des amines aromatiques (groupe 1a), des amines cycloaliphatiques (groupe 1b), des amines araliphatiques (groupe 1c) et/ou des amines aliphatiques et des polyamines aliphatiques (groupe 1d).

5. Système de polyuréthane à deux composantes selon l'une des revendications précédentes, **caractérisé en ce que** l'amine A2 est sélectionnée parmi le groupe 2, qui comprend :
la méthylène-bis-(3-chloro-2,6-diéthylaniline) (M-CDEA),
la 3,5-diméthylthio-2,4- ou -2,6-toluylènediamine,
l'isobutylester d'acide 3,5-diamino-4-chloro-benzoïque (DACB),
le méthylester d'acide méthylène-bis-anthranilique (MBMA)
le 4,4'-diamino-3,3'-dichlorophénylméthane (MOCA)

6. Système de polyuréthane à deux composantes selon la revendication 4, **caractérisé en ce que** l'amine A1 est sélectionnée parmi les groupes 1b), 1c) et/ou 1d) et **en ce que** l'amine A2 est sélectionnée parmi le groupe la), la réactivité R1 de l'amine A1 issue des groupes 1b), 1c) et/ou 1d) étant supérieure à la réactivité R2 de l'amine A2 issue du groupe 1a).

7. Système de polyuréthane à deux composantes selon l'une des revendications précédentes, **caractérisé en ce que** l'amine A1 est le 4,4'-diamino-3,3'-diméthyl-cyclohexylméthane et **en ce que** l'amine A2 est la 4,4'-méthylène-bis-(3 -chloro-2,6-diéthylaniline).

8. Système de polyuréthane à deux composantes selon l'une des revendications précédentes, **caractérisé en ce que** le rapport de masse entre amine A1 et amine A2 est compris entre 0,5:1 et 2:1 % en masse.

9. Système de polyuréthane à deux composantes selon l'une des revendications précédentes, **caractérisé en ce que** le polyol est présent en tant que polyétherpolyols et/ou polyesterpolyols de masse moléculaire dans la gamme de 75 à 6 000 et **en ce que** le diisocyanate est un dérivé de 4,4'-diphénylméthane-diisocyanate.

10. Procédé de fabrication d'un système de polyuréthane à deux composantes selon l'une des revendications précédentes, **caractérisé en ce qu'**une composante amine est dissoute dans la composante polyol, **en ce que** la seconde composante amine et les additifs souhaités sont ajoutés en dosage au moyen d'un agitateur et **en ce que** le mélange obtenu est mélangé avec le diisocyanate dans une installation de mélange et de dosage.

11. Utilisation d'un système de polyuréthane à deux composantes selon l'une des revendications 1 à 9 pour fabriquer des corps de moule pour modèles d'estimation, des prototypes ou équivalents en industrie automobile, ainsi que pour fabriquer des corps structurés, ainsi que des revêtements épais et des passes d'étanchéité.
